# DEMANDE DE BREVET EUROPEEN

(11) **EP 0 914 929 A1**
(43) Date de publication de la demande: **12.05.1999**
(21) Numéro de dépôt: 97810829.8
(22) Date de dépôt: 06.11.1997
(51) Int. Cl.: B29C 47/88, B29C 47/08

(54) **Dispositif d'évacuation pour une purge d'une extrudeuse ou d'une tête d'extrusion**

(71) Demandeur: Nokia - Maillefer Holding SA, 1024 Ecublens (CH)
(72) Inventeur: Barrat, Paul, 1023 Crissier (CH)
(74) Mandataire: BOVARD AG - Patentanwälte

(57) **Abrégé**

Le dispositif d'évacuation (3) est constitué d'un assemblage de plaques métalliques (30,31, 33, 33) aptes à diriger un boudin (20) de matière fondue à haute température sortant d'une purge (15) d'une extrudeuse (1), vers un endroit où ladite matière ne peut gêner l'opérateur de l'extrudeuse. Afin d'éviter que ladite matière adhère sur les surfaces du dispositif en contact avec elle, le dispositif comprend des moyens de refroidissement (4) desdites surfaces. Le dispositif est complété de moyens de support mobiles (34,35) permettant de l'approcher ou de l'éloigner de la zone de travail.

## Description

La présente invention concerne un dispositif d'évacuation de matière à haute température provenant d'un orifice de purge d'une extrudeuse ou d'une tête d'extrusion.

Dans les procédés d'extrusion d'une couche extrudée pour l'isolation d'un conducteur électrique ou d'une fibre optique, de même que pour la pose d'une couche extrudée sur un toron assemblé de conducteurs isolés ou de fibres optiques, ainsi que pour la fabrication de films, profilés tubes ou tout autre élément obtenu par extrusion d'un matériau synthétique, il est parfois nécessaire de purger l'extrudeuse de la matière fondue qu'elle contient. Ces opérations de purge ont généralement lieu au démarrage de l'extrudeuse, lors d'un changement de couleur ou de produit à extruder, lors d'un changement d'outillage, après un arrêt prolongé, etc. A cet effet, l'extrudeuse est munie de une ou plusieurs vannes de purge disposées généralement en amont de la ou des têtes d'extrusion. Dans le cas où l'extrudeuse est munie d'une tête d'extrusion par laquelle il est possible de modifier la couleur du produit extrudé, comme par exemple celle décrite dans la demande EP-A-0.773.097, on a un orifice de purge du produit correspondant à la couleur non utilisée actuellement, placé directement sur la tête d'extrusion.

Le produit sortant est sous forme pâteuse, c'est-à-dire à une température plus élevée que sa température de fusion et sort généralement sous la forme d'un boudin longiligne. Il est nécessaire d'éloigner cette matière afin premièrement d'éviter qu'elle ne s'accroche à l'un ou l'autre des éléments de l'extrudeuse ou de la tête d'extrusion et ne l'encrasse en s'y collant lors de son refroidissement, puis afin de laisser toute la place disponible à l'opérateur pour la conduite de la machine et enfin pour éviter que l'opérateur ne se brûle au contact dudit produit à haute température.

Pour ceci, l'opérateur utilise généralement une plaque de tôle, qu'il place de biais sous l'orifice de sortie de la matière à éliminer, et par laquelle il tente d'éloigner ladite matière de sa zone de travail. L'inconvénient majeur de cette manière de faire est que la matière à éliminer adhère très rapidement sur la plaque de tôle, bloquant ainsi l'élimination correcte désirée de la matière en excès.

Un premier but de l'invention est donc de proposer un dispositif permettant d'évacuer la matière en fusion sortant d'un orifice de purge ou de tout autre orifice de l'extrudeuse, sans que cette matière n'adhère audit dispositif.

Un deuxième but de l'invention est de permettre que le dispositif ci-dessus soit facile d'emploi.

Les buts ci-dessus sont obtenus par un dispositif d'évacuation possédant les caractéristiques de la revendication 1, des formes d'exécution particulières ou variantes étant conformes aux revendications dépendantes.

Plusieurs formes d'exécution de l'invention sont décrites ci-dessous en se référant au dessin annexé comportant les figures où:
la figure 1 représente une vue en élévation d'une portion d'une extrudeuse munie d'un dispositif d'évacuation selon l'invention,
les figures 2A, 2B et 2C montrent respectivement une vue de face, selon une coupe longitudinale et selon une coupe transversale d'une première forme d'exécution d'un dispositif d'évacuation selon l'invention, et
les figures 3A, 3B et 3C montrent respectivement une vue de face, de côté et par dessus d'une deuxième forme d'exécution d'un dispositif d'évacuation selon l'invention,

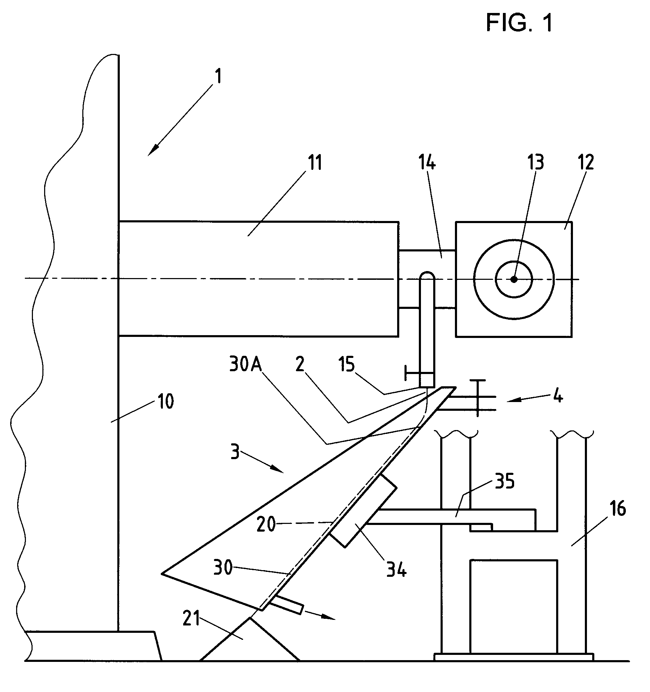

La figure 1 montre de manière schématique le contexte dans lequel un dispositif d'évacuation selon l'invention est utilisé. L'extrudeuse 1, représentée partiellement sur la figure, comprend notamment un bâti 10 et un cylindre 11 portant la tête d'extrusion 12. L'objet 13 sur lequel une couche de matériau synthétique est à déposer par extrusion circule selon une direction perpendiculaire au plan du dessin. La tête d'extrusion 12 est reliée au cylindre 11 par une section de transition et de fixation 14. Selon cette forme d'exécution d'extrudeuse, une purge 15 est disposée sur la section de transition 14. Cette purge 15 est notamment utilisée au démarrage de l'extrudeuse, lors d'un changement de couleur ou de produit à extruder, lors d'un changement d'outillage, après un arrêt prolongé, etc. Dans le cas où la tête d'extrusion 12 permet de choisir la couleur du produit extrudé, ladite tête peut comprendre aussi au moins une purge (non représentée sur la figure).

Durant les périodes où on désire purger la machine, la vanne montée sur la purge 15 est ouverte et le produit pâteux 2 s'écoule par gravité sur le sol. Vu que la tête d'extrusion, respectivement la section de transition 14 sont des organes mécaniques complexes, sur lesquels l'opérateur doit pouvoir intervenir en tout temps pour des réglages, la matière à haute température sortant de la purge 15 doit être éloignée de la zone de travail de l'opérateur. Pour ceci, un dispositif d'évacuation 3 permet que la matière en fusion 3, sortant sous la forme d'un boudin continu 20 de la purge 15 ne se dépose pas sous la tête d'extrusion 12, à la verticale de la purge 15 mais soit évacuée afin par exemple de former un tas 21 en un endroit ne gênant pas l'utilisateur, par exemple en arrière ou sur le côté de l'extrudeuse 1.

Une simple tôle, comme utilisée actuellement à cet effet est rapidement inefficace dans la mesure où cette tôle s'échauffe rapidement au contact du boudin 20 qui s'écoule sur elle, jusqu'à ce que la température de la portion métallique en contact avec le boudin 20 arrive à une température proche de celle dudit boudin. A ce moment, le boudin commence à adhérer à la tôle, s'accumule sur celle-ci et n'est donc plus évacué.

Afin de remédier à cet inconvénient, le dispositif d'évacuation 3 est muni d'un moyen de refroidissement 4 permettant de conserver, au moins à la portion 30 dudit dispositif en contact avec le boudin 20, une température nettement inférieure à celle dudit boudin, évitant ainsi que le boudin 20 n'adhère au dispositif 3 sur ladite section. Ainsi, la matière évacuée 2 peut circuler sous forme d'un boudin 20 sur toute la longueur du dispositif 3 et se forme en un tas 21 hors du dispositif 3, à proximité d'une extrémité dudit dispositif éloignée de la zone de travail de l'opérateur.

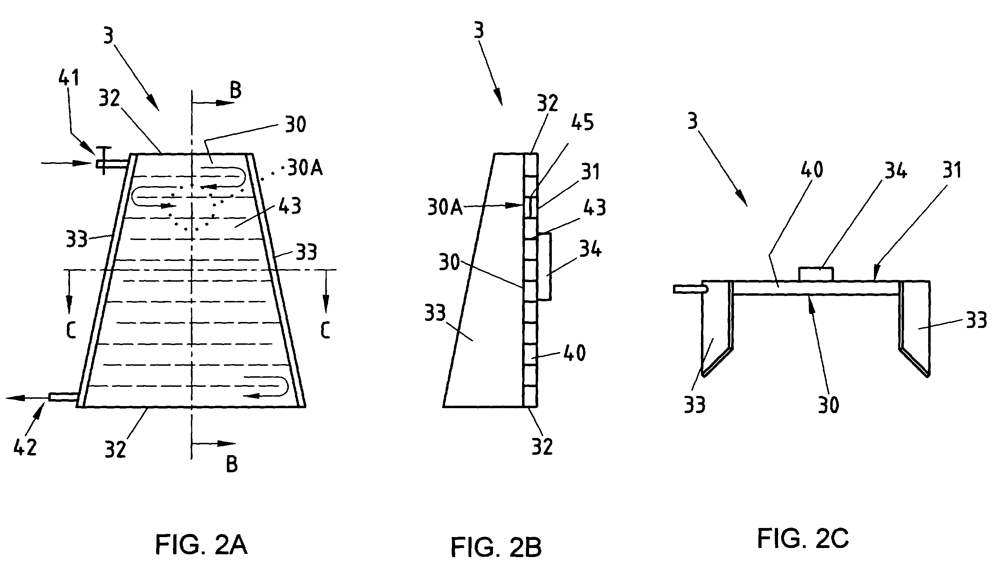

Les figures 2A, 2B et 2C montrent une première forme d'exécution d'un tel dispositif d'évacuation 3. Le dispositif d'évacuation 3 comprend une première plaque métallique 30, plane et essentiellement de forme trapézoïdale. Il comprend en outre une deuxième plaque métallique 31, formant le dos du dispositif et ayant essentiellement la même forme et les mêmes dimensions que la plaque 30. Les deux plaques 30 et 31 sont fixées parallèlement entre elles, de manière à laisser subsister entre elles un espace 40 de l'ordre de 10 à 50 mm. Pour cette fixation des deux plaques 30 et 31, deux parois de tôle 32 relient les deux bordures parallèles correspondantes des plaques 30 et 31, alors que deux autres parois de tôle 33 relient les deux bordures obliques correspondantes des plaques 30 et 31. De préférence, les parois 33 sont nettement plus larges que l'espace libre entre les deux plaques 30 et 31 et font salle perpendiculairement à la plaque 30, du côté de celle-ci du dispositif 3. Ces portions en saillie des parois 33 forment des bordures sur la plaque 30, empêchant le boudin 20 de s'échapper latéralement. De préférence, comme on le voit particulièrement sur le figure 2B, les parois 33, respectivement les bordures qu'elles forment en salle sur la plaque 30, sont effilées, respectivement la hauteur desdites bordures est inférieure, dans la partie supérieure du dispositif 3, à celle de la partie inférieure du dispositif. Cette disposition permet de mieux approcher la partie supérieure du dispositif de la purge 15, comme on le voit à la figure 1. Les plaques métalliques mentionnées ci-dessus sont fixées entre elles, de préférence par soudure des bordures en contact, de manière à laisser un espace 40 limité par les deux plaques 30 et 31 ainsi que par les parois 32 et 33. La surface supérieure de la plaque 30, destinée à évacuer le boudin 20 est de préférence lisse afin qu'aucune aspérité n'empêche cette évacuation. De préférence, le dispositif 3 est constitué de plaques métalliques en acier inoxydable.

Le moyen de refroidissement 4 du dispositif est ici constitué essentiellement de l'espace 40 dans lequel circule un fluide de refroidissement. A cet effet, un orifice d'admission 41 de fluide de refroidissement est prévu dans la portion supérieure du dispositif et un orifice d'échappement 42 est prévu dans la portion inférieure du dispositif. Ces deux orifices 41 et 42 débouchent dans l'espace 40 mentionné précédemment. De préférence, afin d'améliorer l'effet de refroidissement, des chicanes 43 sont prévues dans l'espace 40 afin de forcer le passage du fluide de refroidissement dans tout l'espace 40. Une forme d'exécution desdites chicanes 43 a été représentée sur les figures 2A et 2B, d'autres formes d'exécution étant aussi possibles. Le fluide de refroidissement utilisé est de préférence un liquide ou un gaz à haut pouvoir d'absorption thermique; vu que sur les extrudeuses on dispose déjà de circuits de refroidissement à eau, on utilisera de préférence aussi de l'eau comme fluide de refroidissement du dispositif d'évacuation 3. Le débit et la température de l'eau utilisé sera choisi de manière à ce que la température des portions du dispositif 3 en contact avec la matière à évacuer reste en dessous de la température de ladite matière. Les moyens de refroidissement sont donc conçus, pour une matière fondue sortant généralement de la purge à une température supérieure à 100°C, pour qu'aucune portion de la plaque métallique 30 en contact avec le boudin 20 ne dépasse une température de 80°C. Lors de la construction du dispositif, on veillera à ce que les parois 33 formant les deux bordures latérales du dispositif soient aussi convenablement refroidies afin que le boudin n'adhère pas contre l'une desdites parois. De préférence un refroidissement encore plus énergique peut être souhaité, la température maximum atteinte par un élément quelconque du dispositif, ou plus particulièrement un élément avec lequel l'opérateur peut entrer en contact, ne dépassant alors pas une température de l'ordre de 40°C, principalement pour des raisons de confort de l'opérateur qui peut alors manipuler le dispositif sans aucun risque de se brûler. Un refroidissement énergique du dispositif a en outre l'avantage de refroidir plus rapidement le boudin 20, qui devient alors plus rigide et qui peut être évacué plus facilement.

Le dispositif 3 est complété par des moyens de support, par exemple un dispositif de fixation 34, prévu de préférence sur la portion de dos du dispositif, destiné à fixer le dispositif sur un support propre au dispositif ou sur un support existant de la ligne d'extrusion. A la figure 1, on voit que le dispositif de fixation 34 est relié à un support 35 fixé au support 16 de l'extrémité amont d'un bac de refroidissement de la ligne d'extrusion. D'autres configurations de moyens de support peuvent être envisagées, dépendant essentiellement de la configuration propre de la ligne d'extrusion et de son environnement. De préférence, les moyens de support permettent d'éloigner le dispositif 3 de le zone de travail lorsqu'il n'est pas utilisé, respectivement de le rapprocher lorsqu'on en a besoin. Par exemple le dispositif 3 peut aussi être monté sur des roulettes roulant sur le sol.

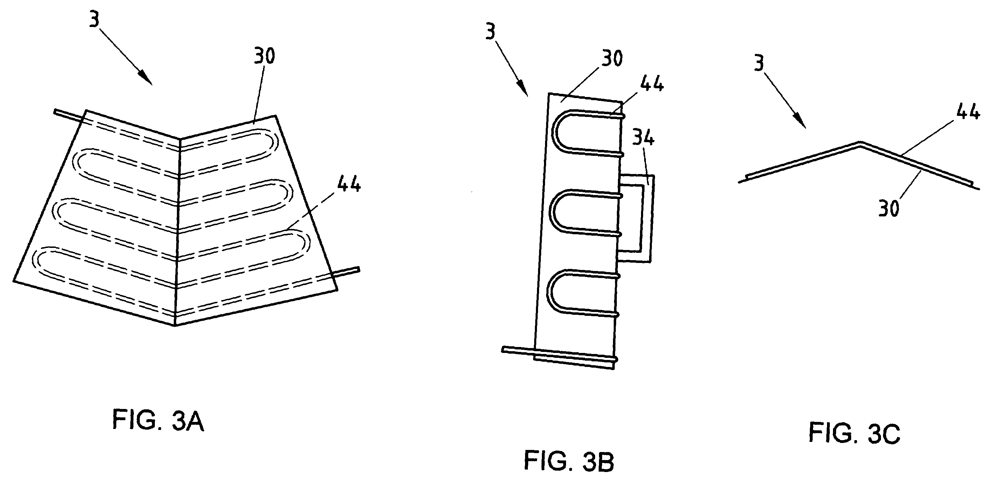

Une deuxième forme d'exécution d'un dispositif d'évacuation 3 est représentée aux figures 3A, 3B et 3C. Ici, le dispositif est essentiellement constitué d'une plaque métallique 30, de forme trapézoïdale et qui est pliée selon son axe longitudinal afin de former un V ouvert, comme on le voit à la figure 3C. Le boudin 20 est destiné à circuler dans la partie concave de fond du V, les deux ailes du V formant bordures afin de l'empêcher de s'échapper transversalement. En variante, la plaque 30 peut être constituée de deux demiplaques soudées entre elles le long de l'arête correspondant au fond du V. Les moyens de refroidissement 4 sont constitués d'un serpentin 44, de préférence en cuivre ou en acier inoxydable, fixé, de préférence par soudure, sur la face arrière convexe de la plaque 30. Comme pour la forme d'exécution précédente, un fluide de refroidissement, de préférence de l'eau froide, circule dans le serpentin 44. Comme pour la première forme d'exécution décrite, la surface supérieure de la plaque 30 doit être lisse et sa température ne doit pas dépasser les températures mentionnées précédemment. Le dispositif 3 est aussi muni d'un dispositif de fixation 34 fonctionnant comme décrit plus haut.

D'autres formes d'exécution du dispositif peuvent encore être envisagées, notamment la section de passage du boudin 20 sur le dispositif, qui est en forme de portion rectangulaire sur la première forme d'exécution et en forme de V concave sur la deuxième forme d'exécution, peut avoir une forme différente, par exemple une portion de polygone avec une face de fond et deux faces latérale inclinées, ou alors une forme en portion d'arc de cercle. Dans toutes les formes possibles, on veillera à cè que le boudin 20 qui circule sur le dispositif reste visible et accessible sur la plus grande partie ou sur tout son trajet sur le dispositif, afin d'éviter un colmatage du dispositif d'évacuation. Les dimensions générales et la forme du dispositif sont choisies essentiellement selon la configuration de la ligne d'extrusion, respectivement de la hauteur par rapport au sol de l'orifice de la purge 15 ainsi que de l'endroit où il est souhaité que le tas 21 de produit éliminé soit confectionné ou que le boudin 20 soit évacué, de même que de la présence d'éventuels autres accessoires dans cette région de la ligne d'extrusion. En particulier selon les besoins, la forme du dispositif peut être telle que le boudin 20 ne suive pas un chemin essentiellement rectiligne sur la face supérieure 30, mais suive un chemin en courbe. De même, pour chacune des formes de la section de passage du boudin on peut avoir un moyen de refroidissement comprenant un espace 40 entre deux plaques superposées, comme décrit pour la première forme d'exécution ou un serpentin fixé derrière la plaque 30, comme décrit dans la deuxième forme d'exécution. D'autres moyens de refroidissement que ceux décrits peuvent aussi être envisagés; en particulier la région 30A de la plaque métallique 30 (voir figures1,2A et 2B) sur laquelle le boudin 20 en provenance de la purge 15 arrive sur le dispositif, respectivement la région où le boudin 20 est à sa plus haute température, peut être refroidie plus énergiquement que le reste du dispositif. Ceci peut être obtenu par une disposition particulière des chicanes 43 ou du serpentin 44 en cet endroit 30A ou alors en munissant cette portion 30A d'un moyen complémentaire de refroidissement, par exemple une ou plusieurs ailettes de radiateur ou un ou plusieurs éléments de type Peltier 45 disposés sur le dos de la plaque 30.

Le dispositif d'évacuation 3 comme décrit remplit donc à la perfection le rôle auquel il est destiné, soit une évacuation rapide du boudin 20 de matière fondue à haute température, évitant ainsi l'encrassement des pièces de la machine et un contact intempestif de l'opérateur avec de la matière à haute température, le dispositif étant pratique d'emploi vu que sa forme et ses dimensions sont adaptées à la configuration de la ligne d'extrusion en cet endroit, de plus il ne gêne pas l'opérateur dans le cas où la ligne d'extrusion fonctionne normalement, soit sans matière à purger, alors qu'il peut rapidement être installé lorsque c'est nécessaire, de par ses moyens de support mobiles. Un tel dispositif d'évacuation peut très facilement' être adapté à une ligne d'extrusion existante.

## Revendications

1. Dispositif d'évacuation (3) de matériau fondu (2) sortant d'un orifice de purge (15) d'une extrudeuse (1) ou d'une tête d'extrusion (12) à haute température, ledit dispositif comprenant une plaque (30) pour recevoir et évacuer ledit matériau, caractérisé en ce que ledit dispositif (3) est en outre muni de moyens de refroidissement (4) de ladite plaque (30).

2. Dispositif selon la revendication 1, caractérisé en ce qu'il présente une section de passage essentiellement concave pour le matériau à évacuer.

3. Dispositif selon l'une des revendications précédentes, caractérisé en ce qu'il est constitué en acier inoxydable, la surface de la plaque métallique (30) sur laquelle le matériau est évacué étant lisse.

4. Dispositif selon l'une des revendications précédentes, caractérisé en ce que les moyens de refroidissement (4) sont constitués d'un circuit de circulation d'un fluide.

5. Dispositif selon la revendication 4, caractérisé en ce que le circuit de circulation d'un fluide est constitué d'un canal de circulation d'eau parcourant un espace (40) disposé entre une face arrière de ladite plaque métallique (30) et une face d'une autre plaque métallique (31), ledit espace étant limité par des parois (32,33) reliant les bordures des deux dites plaques métalliques (30,31), un orifice d'entrée (41) et un orifice de sortie (42) étant disposés respectivement aux deux extrémités dudit canal.

6. Dispositif selon la revendication 4, caractérisé en ce que le circuit de circulation d'un fluide est constitué d'un tube métallique (44) fixé de manière à serpenter sur la face arrière de ladite plaque métallique (30) et comportant respectivement un orifice d'entrée et un orifice de sortie sur ses deux extrémités.

7. Dispositif selon l'une des revendications 5 ou 6, caractérisé en ce que le circuit de refroidissement est conçu pour refroidir plus énergiquement une portion (30A) de la plaque métallique (30) sur laquelle le produit à évacuer (2) provient directement de la purge (15).

8. Dispositif selon l'une des revendications précédentes, caractérisé en ce que les moyens de refroidissement (4) sont aptes à conserver aux portions dudit dispositif en contact avec la matière à évacuer (20) une température inférieure à 80°C.

9. Dispositif selon l'une des revendications précédentes, caractérisé en ce que les moyens de refroidissement (4) sont aptes à conserver aux portions dudit dispositif avec lesquelles l'opérateur peut entrer en contact, une température inférieure à 40°C.

10. Dispositif selon l'une des revendications 4 à 9, caractérisé en ce que le circuit de circulation d'eau est coupé à un circuit de circulation d'eau de refroidissement de l'extrudeuse.

11. Dispositif selon l'une des revendications précédentes, caractérisé en ce qu'il comprend des moyens de support mobiles (34,35), aptes à éloigner/rapprocher ledit dispositif de la purge (15).
